# EUROPÄISCHE PATENTSCHRIFT

(11) **EP 0 379 717 B1**
(45) Veröffentlichungstag und Bekanntmachung des Hinweises auf die Patenterteilung: **03.03.1993**
(21) Anmeldenummer: 89123713.3
(22) Anmeldetag: 22.12.1989
(51) Int. Cl.: E04F 15/02, E04F 15/10, E01C 13/00

(54) **Platte für Bodenbelag**
Slab for a floor covering
Dalle pour le revêtement de sols

(30) Priorität: 27.01.1989 DE 3902419
(43) Veröffentlichungstag der Anmeldung: 01.08.1990
(73) Patentinhaber: Opitz, Dieter, 91180 Heideck (DE)
(72) Erfinder: Opitz, Dieter, 91180 Heideck (DE)
(74) Vertreter: Brose, D. Karl, Dipl.-Ing.

(56) Entgegenhaltungen:
- EP-A- 0 135 595
- EP-A- 0 204 947
- WO-A-88/10339
- DE-A- 2 812 008
- DE-A- 3 545 748
- DE-C- 1 544 816
- DE-U- 8 513 329
- FR-A- 1 473 422
- GB-A- 805 285

## Beschreibung

Die Erfindung betrifft einen Bodenbelag bestehend aus Platten aus elastischem Material.

Durch die DE-OS 31 03 632 und die DE-OS 29 30 426 sind Doppelbodenplatten mit zahlreichen noppenförmigen Vorsprüngen an ihren Unterseiten bekannt. Diese Noppen der Doppelbodenplatten stützen sich alle auf einem Unterboden ab und bilden somit eine Vielzahl von Tragfüßen für die Doppelbodenplatte. Des weiteren ist aus der DE-PS 34 31 118 eine freitragende Verbundbauplatte mit einer wannenförmigen Bewehrung bekannt, welche an ihrer Unterseite mit einer Vielzahl von noppenartigen und füllstoffaufnehmenden Ausformungen versehen ist. Diese bekannten Doppelbodenplatten besitzen aufgrund der noppenförmigen Vorsprünge an ihren Unterseiten ein gegenüber Vollplatten verringertes Gewicht und weisen aufgrund der wannenförmigen Bewehrungen als Verbundbauplatte eine hohe Brandfestigkeit, Belastbarkeit und Trittschalldämmung auf. Als Füllstoffe werden im Regelfall Anhydrit, Beton oder ähnliche Stoffe eingesetzt. Sowohl wegen der aus Stahl gebildeten Bewehrungen als auch wegen der Füllstoffe aus Beton sind diese bekannten Doppelbodenplatten trotz der Materialeinsparungen durch die noppenartigen Vorsprünge noch immer von einem sehr erheblichen Gewicht. Außerdem weisen diese Platten keine Einrichtungen zur Verbindung mit weiteren Bauplatten auf.

Aus der DE-PS 22 62 990 ist eine mehrschichtige Tafel zum Fernhalten von Feuchtigkeit von im Boden angeordneten Bauwerkteilen bekannt. Diese Tafel besitzt auf einer Oberfläche Vorsprünge, die als vertikal verlaufende Rippen oder als Noppen ausgebildet sein können. Zwischen den Noppen sind zusätzliche Drainagekanäle vorgesehen, um eindringende Feuchtigkeit abführen zu können. Diese bekannte Tafel besteht somit aus einem die Noppen aufweisenden tafelförmigen Element aus Metall oder Kunststoff, in das eine Drainageschicht aus Glasfasern, Steinwolle oder Schaumkunststoff eingefüllt wird. Um ein Nebeneinandersetzen von mehreren Tafeln zu erlauben, besitzen die tafelförmigen Elemente Überlappungen. Eine solche mehrschichtige Tafel eignet sich allenfalls für den vorgesehenen Zweck eines Wandbelages, nicht jedoch als begehbare und auch mit großen Gewichten belastbare Bodenplatte. Schließlich ist aus der DE-PS 15 44 816 ein elastisches Kunststofflaminat von großer Druck- und Biegefestigkeit bekannt, welches aus einer Trägerschicht und einer darüber aufgebrachten Deckschicht besteht. Diese Deckschicht weist neben Zusatzmaterialien und einer Verstärkung ein Kunstharz auf, als durch Polyaddition aus hydroxilgruppenhaltigen Polyestern und/oder Polyäthern und Isocyanaten entstandenes Produkt. Als aushärtbares Kunstharz für die Trägerschicht ist ein Polyesterharz, Epoxyd- oder Butadienmischpolymerisatharz verwendet. Die Harze können kaltgehärtet oder zwecks Erreichung sehr hoher Festigkeit warmverpreßt werden. Auf besondere Formgebungen einer Platte aus einem solchen elastischen Kunststofflaminat und auf einen Verbund von aneinandergesetzten Platten geht diese DE-PS 15 44 816 nicht ein.

Der der vorliegenden Erfindung nächstkommende Stand der Technik ergibt sich aus der WO 88/10 339. Dieses Dokument zeigt bereits eine Platte aus elastischem Material zur Verwendung als Bodenbelag mit Noppen an ihrer Unterseite und mit Randnoppen, die so ausgebildet sind, daß die Randnoppen Teil einer ganzen Noppe sind und erst in Verbindung mit den Randnoppen einer oder mehrerer aneinandergefügter Platten eine ganze Noppe ergeben. Dabei sind die Platten mit den benachbarten Platten durch ein auf die jeweils benachbarten Randnoppen aufgesetztes Verbindungselement zusammengehalten. Gemäß dieser Entgegenhaltung werden diese Platten als Belag für die Oberfläche von Spielplätzen verwendet. Dabei liegen diese Platten stets als oberste Schicht. Es ist keinesfalls vorgesehen, auf diesen Platten noch irgend etwas anderes anzubringen.

Ausgehend von diesem Stand der Technik ist es Aufgabe der vorliegenden Erfindung, einen neuartigen und sehr vorteilhaften Bodenbelag für Reithallen oder Reitplätzen zu schaffen.

Diese Aufgabe wird erfindungsgemäß dadurch gelöst, daß ein Verbund von Platten gemäß dem Oberbegriff des Anspruchs 1 als Bodenbelag von Reithallen oder Reitplätzen verwendet wird, und dabei direkt auf einem ebenen Untergrund der Reithalle oder des Reitplatzes aufliegt und mit Sägemehl oder Sand bedeckt ist.

Besonders bevorzugte Ausführungsformen für die erfindungsgemäß zu verwendenden Platten ergeben sich aus den Unteransprüchen 2 bis 11.

Ein erfindungsgemäßer Bodenbelag für Reithallen und Reitplätze hat den Vorteil hoher Belastbarkeit und Elastizität. Eventuell eintretende Feuchtigkeit durch Witterungseinflüsse oder ähnliches kann durch die Drainage auf der Unterseite der Platten abfließen. Dadurch wird ein idealer Reithallen- bzw. Reitplatz-Bodenbelag geschaffen. Dieser Bodenbelag hat dabei den besonderen Vorteil, daß beispielsweise Reitplätze für Turniere in optimaler Weise schnell und sicher hergestellt werden können. Bei Beendigung eines solchen Reitturniers kann der Bodenbelag ebenso einfach wieder demontiert werden.

In der Zeichnung sind Beispiele der Erfindung dargestellt. Es zeigen:
Fig. 1 eine Platte für einen Wand- oder Bodenbelag in der Draufsicht,
Fig. 2 einen Schnitt durch die Platte gemäß Fig. 1 nach der Linie II-II,
Fig. 3 eine Ansicht auf die Unterseite der Platte gemäß dem Pfeil III in Fig. 2,
Fig. 4 eine Draufsicht auf die Unterseiten von mehreren zu einem Plattenverbund zusammengefügten Platten,
Fig. 5 einen Schnitt durch eine Randnoppe gemäß der Linie V-V in Fig. 4,
Fig. 6 eine Einrichtung zur Herstellung der Platte in schematischer Darstellung.

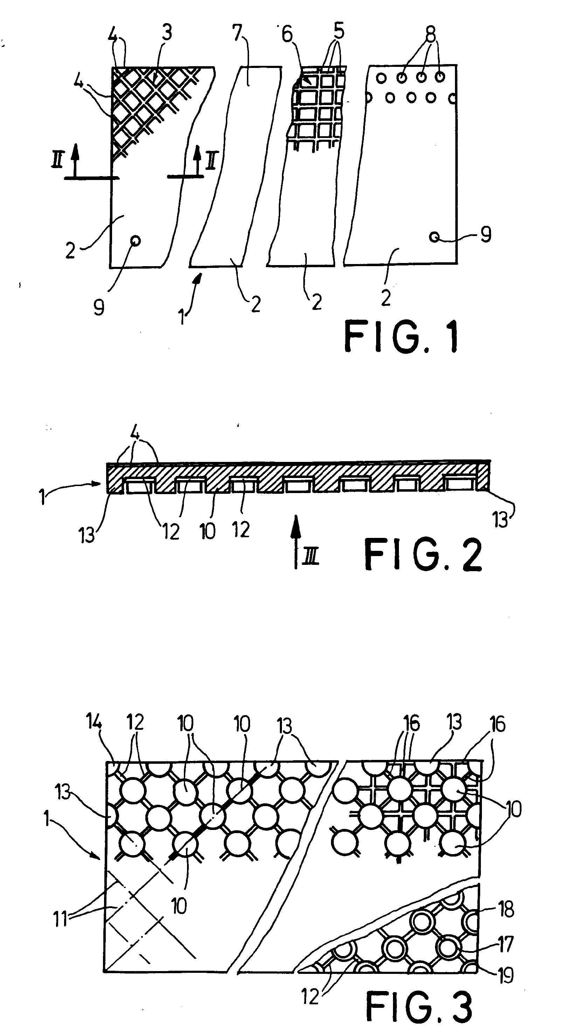

Die als Bodenbelag oder als Wandbelag von einem beliebigen Flächenformat gebildete Platte 1 besitzt auf ihrer Oberfläche 2 ein räumlich vorstehendes Rautenmuster 3, welches aus diagonal verlaufenden Stegen 4 gebildet ist. Statt dieses Rautenmusters 3 ist auch ein aus Stegen 5 gebildetes Karomuster 6 möglich. Neben einer völlig ebenen Oberfläche 7 zeigt Figur 1 ferner die Möglichkeit einer Oberfläche mit einzelnen Vorsprüngen 8 auf, die im regelmäßigen oder unregelmäßigen Abstand zueinander auf der Oberfläche 2 angeordnet sein können.

Diese aufgezählten Möglichkeiten sind alle in Fig. 1 nebeneinander dargestellt. Die Oberfläche 2 einer Platte 1 kann sowohl einheitlich mit einem der geschilderten Muster 3, 7, 6 und 8 ausgeführt sein. Sie kann ebenso aber auch durch eine Mischung dieser Musterungen gestaltet sein.

Bei der Schnittdarstellung in Fig. 2 ist nur die Oberfläche 2 mit einem Rautenmuster 3 gezeichnet.

Mit 9 sind in Fig. 1 Durchgangsbohrungen bezeichnet, die einen Durchtritt von Flüssigkeit ermöglichen oder aber auch zur Handhabung der Platten bei der Verlegearbeit dienen können.

Aus der Fig. 3 ist die Unterseite der Platte 1 in wiederum unterschiedlichen Ausführungsarten nebeneinander dargestellt. Die wohl gängigste Ausführung zeigt kreisförmige Noppen 10, die als Vollzylinder ausgebildet sind und unter 45° zueinander versetzt in regelmäßigen Abständen zueinander angeordnet sind. Auf den 45°-Diagonalen 11 befinden sich einstückige Querstege 12, deren Höhe geringer ist als die Höhe der Noppen 10. Dies ist insbesondere aus Fig. 2 deutlich erkennbar.

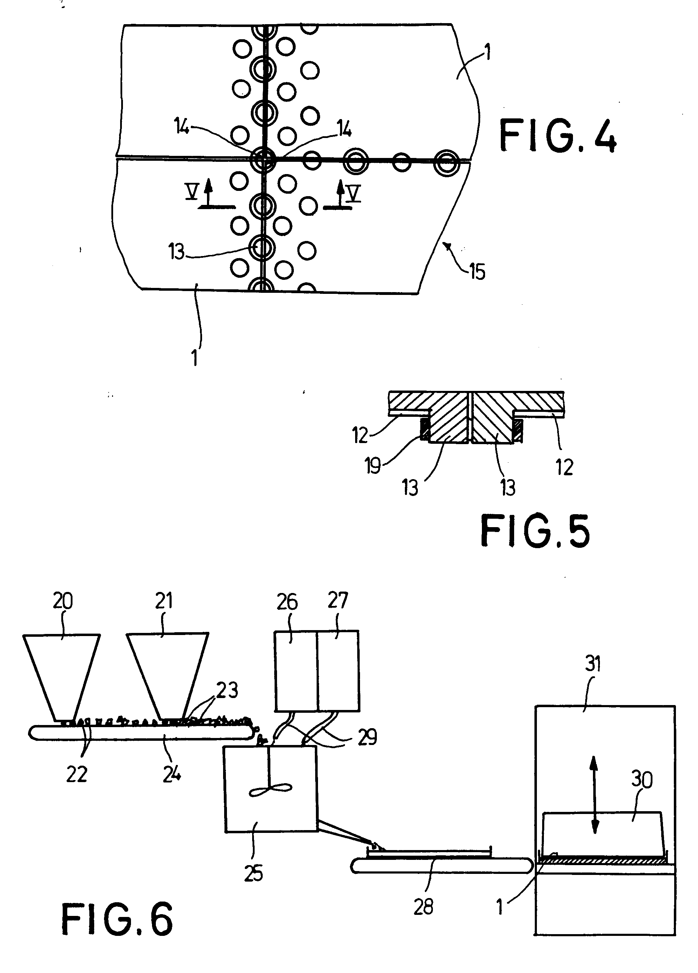

Die Platte 1 besitzt Randnoppen 13 und 14. Die Randnoppen 13 sind dabei jeweils als Halbkreis gebildet, während die Randnoppe 14 in der Ecke der Platte 1 einen Viertelkreis darstellt. Bei einem Zusammenfügen von mehreren Platten 1 zu einem Plattenverbund 15 gemäß Fig. 4 sind die Randnoppen 13 mit entsprechenden Randnoppen einer zweiten oder weiteren Platte zusammengefügt, während die Randnoppe 14 in der Ecke von vier aneinandergefügten Platten 1 zu einer ganzen Noppe zusammengefügt ist. Dies bedeutet, daß Randnoppen 13 und 14 einer Platte 1 jeweils Teile einer ganzen Noppe 10 sind und erst in Verbindung mit den Randnoppen 13 und 14 einer oder mehrerer aneinandergefügter Platten 1 eine ganze Noppe 10 ergeben.

Aus Fig. 3 sind weitere Möglichkeiten von Ausführungen der Noppen mit Zwischenstegen erkennbar. So ist einmal wiederum eine Noppe 10 als kreisförmiger Vollzylinder dargestellt, wobei jedoch Querstege 16 von jeder Noppe 10 in allen Richtungen ausgeführt sind. D.h., daß die Querstege 16 sowohl in der diagonalen als auch in der senkrechten und waagerechten Linie verlaufen.

Um eine weitere Gewichtsersparnis zu erzielen, sind in einer weiteren Ausführungsart die Noppen 17 in Fig. 3 als kreisförmige Hohlzylinder ausgebildet, zwischen die wiederum auf der 45°-Diagonalen Querstege 12 eingesetzt sind. Bei dieser Ausführungsart sind selbstverständlich auch entsprechende Randnoppen 18 und 19 als Teile eines Hohlzylinders dargestellt.

Um den Verbund von mehreren Platten 1 zu einem einheitlichen Bodenbelag 15 zusammenfügen zu können, sind zumindest über einen Teil der Randnoppen 13 (oder Randnoppen 18) Ringe 19 aufgebracht. Ein solcher Ring 19 kann aus einem Kunststoff oder einem Metall gebildet sein. Dieser Ring 19 wird nach Zusammenfügen von einzelnen Platten einfach auf die eine ganze Noppe bildenden Randnoppen 13 aufgeschoben. Die Platten können selbstverständlich auch von oben mit ihren Randnoppen in einen Ring 19 eingedrückt werden. Soll eine einzelne Platte ausgewechselt werden oder aber der ganze Bodenbelag abgebaut werden, so kann der Ring 19 einfach abgestreift werden, wodurch die Entnahme von Platten 1 möglich ist.

Durch eine solche einfache Verbundbauweise können beispielsweise Reitplätze für Turniere in optimaler Weise schnell und sicher hergestellt werden. Bei Beendigung eines solchen Reitturnieres kann der Bodenbelag aus den Platten 1 ebenso einfach wieder demontiert werden.

Da das Plattenmaterial schneidfähig ist, sind selbstverständlich auch jede Art von Zuschnitten möglich. Ferner ist die Erfindung nicht an die in den Figuren dargestellte Rechteckform gebunden.

In Fig. 6 wird in einfacher schematischer Darstellung eine Einrichtung zur Herstellung einer Platte 1 gezeigt. Aus den Behältern 20 und 21 wird ein Granulat 22 und 23, wie es bei der Runderneuerung von Reifen oder von Altreifen anfällt, auf ein Förderband 24 gegeben. Von dort wird das Granulatgemisch in einen Mischbehälter 25 eingegeben. Anschließend wird aus den zwei Bindemittelbehältern 26 und 27 über Düsen 29 ein Zweikomponenten-Bindemittel in den Mischbehälter 25 eingegeben und mit dem Granulat intensiv gemischt. Das Zweikomponenten-Bindemittel aus den Komponenten 26 und 27 besteht auf der Basis eines Reaktionsproduktes mit einem in Harzbindemittel eingemischten Füllstoff. Dieser Füllstoff kann ein Calciumoxid-, Magnesiumoxid- oder Hydroxid-Füllstoff sein. Das Reaktionsprodukt weist endständige OH-Gruppen mit Polyester und/oder Polyäther sowie Diolen, Triolen, evtl. Wasser und einem Diisozyanat in einer Menge auf, die einer stöchiometrischen Reaktion von anwesenden Hydroxylgruppen entspricht. Dieses Zweikomponenten-Bindemittel gewährleistet bereits bei niedrigen Temperaturen und unter Anwendung von Druck eine außergewöhnliche Festigkeit der herzustellenden Platten. Das Gemisch wird aus dem Mischbehälter 25 in eine Form 28 gegeben. Diese Form 28 wird in eine Presse gebracht und durch einen Stempel 30 mit Druck beaufschlagt. Nach entsprechender Verweilzeit in der Presse 31 wird der Stempel 30 wieder angehoben und die fertige Platte 1 aus der Form 28 entnommen.

## Patentansprüche

1. Bodenbelag bestehend aus Platten aus elastischem Material mit Noppen (10) an ihrer Unterseite und mit Randnoppen (13, 14), die so ausgebildet sind, daß die Randnoppen (13, 14) Teile einer ganzen Noppe sind und erst in Verbindung mit den Randnoppen (13, 14) einer oder mehrerer aneinandergefügter Platten (1) eine ganze Noppe ergeben, wobei die Platten (1) mit den benachbarten Platten (1) durch ein auf die jeweils benachbarten Randnoppen (13, 14) aufgesetztes Verbindungselement (19) zusammengehalten sind, **dadurch gekennzeichnet,** daß dieser Verbund von Platten (1) zur Verwendung als Bodenbelag von Reithallen oder Reitplätzen direkt auf einem ebenen Untergrund der Reithalle oder des Reitplatzes aufliegt und mit Sägemehl oder Sand bedeckt ist.

2. Bodenbelag nach Anspruch 1,
dadurch gekennzeichnet,
daß die Noppen (10, 13, 14) kreisförmig als Vollzylinder ausgebildet sind.

3. Bodenbelag nach Anspruch 1,
dadurch gekennzeichnet,
daß die Noppen (10, 13, 14) kreisförmig als Hohlzylinder ausgebildet sind.

4. Bodenbelag nach Anspruch 1,
dadurch gekennzeichnet,
daß die Noppen (10, 13, 14) wahlweise als prismatische Vollkörper oder Hohlkörper ausgebildet sind.

5. Bodenbelag nach den Ansprüchen 1 bis 4,
dadurch gekennzeichnet,
daß die Noppen (10, 13, 14) auf der Unterseite der Platte (1) in einem regelmäßigen Abstand zueinander angeordnet sind.

6. Bodenbelag nach den Ansprüchen 1 bis 5,
dadurch gekennzeichnet,
daß die Noppen (10, 13, 14) in einem gleichmäßigen Abstand unter 45° zueinander versetzt angeordnet sind und die Querstege (12) jeweils auf den 45°-Diagonalen zwischen den Noppen (10, 13, 14) verlaufen.

7. Bodenbelag nach Anspruch 1,
dadurch gekennzeichnet,
daß die Teile der Randnoppen (13, 14) einer ersten Platte (1) mit den zugeordneten Teilen von Randnoppen (13, 14) einer zweiten und einer weiteren Platte (1) durch einen außen über die zusammengefügten Teile der Randnoppen (13, 14) aufsetzbaren Ring (19) zusammenhaltbar sind.

8. Bodenbelag nach den Ansprüchen 1 bis 7,
dadurch gekennzeichnet,
daß die Höhe der Noppen (10) und der Randnoppen (13, 14) mindestens gleich groß ist der Dicke der mit ihnen einstückig verbundenen Grundplatte (1).

9. Bodenbelag nach den vorhergehenden Ansprüchen,
dadurch gekennzeichnet,
daß in der Grundplatte (1) zumindest eine Durchgangsbohrung (9) vorgesehen ist, die außerhalb der Noppen (10) angeordnet ist.

10. Bodenbelag nach Anspruch 1,
dadurch gekennzeichnet,
daß die den Noppen (10) entgegengesetzte Oberfläche (2) der Platte (1) mit einem aus einstückig mit der Platte (1) verbundenen Stegen (4, 5) geformten Rautenmuster (3, 6) versehen ist.

11. Bodenbelag nach den Ansprüchen 1 bis 10,
dadurch gekennzeichnet,
daß die platten aus einem Granulat (24) von Altreifenmaterial oder bei der Runderneuerung von Reifen anfallendem Material gebildet ist, welches wahlweise mit einem Granulat (23) größerer oder kleinerer Körnung gleichen Werkstoffs vermengt und nach Zumischung eines Zweikomponenten-Bindemittels (26, 27), das auf der Basis eines Reaktionsproduktes mit einem in Harzbindemittel eingemischten Calcium-, oder Magnesiumoxid- oder Hydroxid-Füllstoff und endständige OH-Gruppen aufweisenden Polyester und/oder Polyäther sowie Diolen, Triolen, Wasser und einem Diisozyanat in einer Menge besteht, die einer stöchiometrischen Reaktion von anwesenden Hydroxylgruppen entspricht, unter Anwendung von äußerem Druck bei relativ niedriger Temperatur und einer Feuchte von nahezu Null % in einer Form (28) einstückig herstellbar ist.

## Claims

1. A floor covering consisting of tiles made from an elastic material with raised knubs (10) on the underside thereof and with marginal knubs (13,14) which are designed as parts of an entire knub and form such an entire knub only in conjunction with the marginal knubs (13,14) of one or more mutually adjoining tiles (1), the tiles being held together with adjacent tiles (1) by means of a connecting element (19) fitted over respectively adjacent marginal knubs (13,14), **characterized** in that, when applied as a floor covering in riding schools,equestrian halls or like locations, this compound assembly of tiles (1) rests directly on a level subfloor of such riding schools or like location and is covered over with sawdust or sand.

2. A floor covering according to claim 1, **characterized** in that the knubs (10,13 14) are of circular solid cylindrical configuration.

3. A floor covering according to claim 1, **characterized** in that the knubs (10,13 14) are of circular, hollow cylindrical configuration.

4. A floor covering according to claim 1, **characterized** in that the knubs (10,13 14) are optionally of prismatic solid or hollow body configuration.

5. A floor covering according to claims 1 to 4, **characterized** in that the knubs (10,13,14) are provided in relatively regularly spaced arrangement on the underside of the tile(1).

6. A floor covering according to claims 1 to 5, **characterized** in that the knubs (10,13,14) are evenly spaced and relatively offset by an angle of 45° and the transverse bars (12) in each case extend along the 45° diagonals between the knubs (10,13,14).

7. A floor covering according to claim 1, **characterized** in that the parts of the marginal knubs (13,14) of a first tile (1) are adapted to be connected and held together with the associated parts of marginal knubs (13, 14) of a second and of a further tile (1) by means of a ring (19) adapted to be fitted externally over the mutually adjoining parts of the marginal knubs (13,14).

8. A floor covering according to claims 1 to 7, **characterized** in that the height of the knubs (10) and of the marginal knubs (13, 14) is at least equal to the thickness of the basic tile (1) integrally connected therewith.

9. A floor covering according to the preceding claims, **characterized** in that the basic tile (1) is provided with at least one through-bore (9) arranged externally of the knubs (10).

10. A floor covering according to claim 1, **characterized** in that the surface (2) of the tile (1) which Is directed oppositely from the knubs (10) is provided with a rhombus pattern (3,6) formed by bars (4,5) moulded integrally with the tile (1).

11. A floor covering according to claims 1 to 10, **characterized** in that the tile is made from a granulate (24) consisting of old tyre material or of material accruing as waste during the retreading of tyres which is optionally mixed with a granulate (23) of larger or smaller grain size of a like material and which ,after admixture of a two-component bonding agent (26,27) consisting on the basis of a reaction product with calcium-or magnesium-oxide -or hydroxide filler substance mixed into resin bonding means and a polyester comprising terminal OH-groups and/or polyether as well as dioles ,trioles,water and a di-isocyanate in a quantity which corresponds to a stoichiometric reaction of hydroxyl groups present, can be integrally moulded in a mould (28) under application of external pressure at relatively low temperature and a humidity of virtually zero %.

## Revendications

1. Revêtement de sol constitué de dalles en matière élastique avec des boutons (10) sur leur face inférieure et avec des boutons de bordure (13, 14), qui sont conçus de manière que les boutons de bordure (13, 14) font partie d'un bouton entier et ne donnent un bouton entier qu'en liaison avec les boutons de bordure (13, 14) d'une ou de plusieurs dalles (1) assemblées les unes contre les autres, les dalles (1) étant maintenues assemblées aux dalles (1) voisines, par un élément de liaison (19) placé sur les boutons de bordure (13, 14) voisins, caractérisé en ce que cet assemblage de dalles (1), destiné à être utilisé comme revêtement de sol de manèges ou de terrains d'équitation, repose directement sur un support plan du manège ou du terrain d'équitation et est recouvert de sciure ou de sable.

2. Revêtement de sol selon la revendication 1, caractérisé en ce que les boutons (10, 13, 14) sont des cylindres pleins circulaires.

3. Revêtement de sol selon la revendication 1, caractérisé en ce que les boutons (10, 13, 14) sont des cylindres creux circulaires.

4. Revêtement de sol selon la revendication 1, caractérisé en ce que les boutons (10, 13, 14) sont au choix des corps pleins ou des corps creux prismatiques.

5. Revêtement de sol selon les revendications 1 à 4, caractérisé en ce que les boutons (10, 13, 14) sont régulièrement espacés les uns des autres sur la face inférieure de la dalle (1).

6. Revêtement de sol selon les revendications 1 à 5, caractérisé en ce que les boutons (10, 13, 14) sont régulièrement espacés et décalés de 45° les uns par rapport aux autres et en ce que les cloisons transversales (12) s'étendent sur les diagonales à 45° situées entre les boutons (10, 13, 14).

7. Revêtement de sol selon la revendication 1, caractérisé en ce que les parties des boutons de bordure (13, 14) d'une première dalle (1) peuvent être maintenues assemblées avec les parties correspondantes des boutons de bordure (13, 14) d'une deuxième et d'une autre dalle (1), par un anneau (19) à placer à l'extérieur sur les parties assemblées des boutons de bordure (13, 14).

8. Revêtement de sol selon les revendications 1 à 7, caractérisé en ce que la hauteur des boutons (10) et des boutons de bordure (13, 14) est au moins égale à l'épaisseur de la dalle de base (1) assemblée d'une seule pièce avec ceux-ci.

9. Revêtement de sol selon les revendications précédentes, caractérisé en ce qu'il est prévu dans la dalle de base (1) au moins un trou débouchant (9) qui se situe à l'extérieur des boutons (10).

10. Revêtement de sol selon la revendication 1, caractérisé en ce que la surface (2), opposée au bouton (10), de la dalle (1), est pourvue de motifs à losanges (3, 6) formés par des cloisons (4, 5) assemblées d'une seule pièce avec la dalle (1).

11. Revêtement de sol selon les revendications 1 à 10, caractérisé en ce que les dalles sont formées à partir de granulés (24) de matière de pneus usés ou de matière provenant du rechapage de pneus, qui sont mélangés à des granulés (23) du même matériau, de granulométrie supérieure ou inférieure au choix et en ce qu'elles peuvent être réalisées d'une seule pièce dans un moule (28), après addition d'un liant à deux composants (26, 27) qui se forme, à base d'un produit de réaction avec une charge de calcium ou d'oxyde de magnésium ou d'hydroxyde, mélangée à des liants résineux ainsi que des polyester comportant des groupes terminaux OH et/ou des polyéthers ainsi que du diolène, du triolène, de l'eau et un diisocyanate, dans une quantité qui correspond à une réaction stoechiométrique de groupes hydroxyles présents, par utilisation d'une pression extérieure, à une température relativement basse et une humidité voisine de zéro %.
